# EUROPÄISCHE PATENTSCHRIFT

(11) **EP 0 342 441 B1**
(45) Veröffentlichungstag und Bekanntmachung des Hinweises auf die Patenterteilung: **09.08.1995**
(21) Anmeldenummer: 89108071.5
(22) Anmeldetag: 04.05.1989
(51) Int. Cl.: H01H 37/00, H01H 1/50, H02H 5/04

(54) **Temperaturschalteinrichtung**
Temperature sensitive commutation device
Dispositif de commutation sensible à la température

(30) Priorität: 20.05.1988 DE 8806648 U
(43) Veröffentlichungstag der Anmeldung: 23.11.1989
(73) Patentinhaber: Erbengemeinschaft Peter Hofsäss: Hofsäss, U. Hofsäss, M.P. Hofsäss, D.P. Hofsäss, H.P. Hofsäss, C.R. Hofsäss, B.M., 75181 Pforzheim (DE)
(72) Erfinder: Hofsäss, Peter, (DE)
(74) Vertreter: Otten, Hajo, Dr.-Ing.

(56) Entgegenhaltungen:
- DE-A- 2 511 214
- DE-U- 7 333 991
- US-A- 3 352 987
- US-A- 4 092 624

## Beschreibung

Die Erfindung betrifft eine Temperaturschalteinrichtung für ein gegen Übertemperatur aufgrund eines Fehlers zu schützendes elektrotechnisches Teil, wie für einen Motor, beispielsweise einen Motor für Rolladenantriebe oder dergleichen, mit einem ersten Bimetallschalter und einem zu diesem parallel geschalteten ohmschen Widerstand, so daß nach Öffnen des Bimetallschalters aufgrund einer Übertemperatur der Stromfluß über den ohmschen Widerstand erfolgt, dieser Wärme erzeugt und hierdurch der erste Bimetallschalter auch bei Abkühlung der den Schaltvorgang zunächst auslösenden, durch eine Fehlfunktion des zu schützenden elektrotechnischen Teils bewirkten Übertemperatur aufgrund der Wärmeentwicklung des ohmschen Widerstandes offengehalten wird.

Derartige sogenannte selbsthaltende Temperaturschalteinrichtungen sind bekannt (DE-GM 83 00 960). Sie heißen selbsthaltend, weil sie durch den zum Schaltwerk parallel geschalteten Widerstand aufgrund der Wärmeerzeugung desselben nach Öffnen weiterhin offengehalten werden. Beim Einsatz, insbesondere bei Motoren, kann sich bei ohmschen Widerständen das Problem ergeben, daß, insbesondere wenn die Schalteinrichtungen gekapselt ausgebildet sind, durch die zum Abschalten des Schaltwerks führende Umgebungstemperatur und zusätzlich die hierdurch bewirkte Temperaturerzeugung des parallel geschalteten Widerstandes in der Schalteinrichtung sich eine so hohe Temperatur ergibt, daß irreversible Schäden am schaltenden Bimetallelement auftreten, Isoliermassen wie Isolierlack oder -Beschichtungen von Drähten auch der zu schützenden Einrichtung, Vergußmassen od.dgl., aufgeweicht oder beeinträchtigt und sogar Lötungen in ihrer Festigkeit reduziert werden können. Dieses Problem kann insbesondere bei Rolladenantrieben auftreten, da hier auch bei sehr niedrigen Außentemperaturen bei einer Fehlfunktion des Antriebs und nachfolgendem Abschalten des Temperaturwächters dieser durch den parallel geschalteten Widerstand offengehalten werden muß, der Widerstand also eine erhebliche Wärme erzeugen muß. Andererseits kann die Abschalttemperatur auch nicht zu niedrig gewählt werden, da sonst der Bimetallschalter als Temperaturwächter schon bei Erwärmung, beispielsweise aufgrund von Sonneneinstrahlung, sich öffnen und damit den Antrieb außer Betrieb setzen würde.

Es sind auch selbsthaltende Temperaturschalteinrichtungen bekannt, bei denen der parallel geschaltete Widerstand kein ohmscher, sondern ein PTC-Widerstand ist. Diese sind wesentlich teuerer als ohmsche, wie beispielsweise Dickschichtwiderstände od.dgl.

Der Erfindung liegt daher die Aufgabe zugrunde, eine Schalteinrichtung der eingangs genannten Art mit einem zum ersten Temperaturschalter parallel geschalteten ohmschen Widerstand zu schaffen, bei dem eine Beschädigung oder Beeinträchtigung des ersten Temperaturschalters nach Abschalten desselben aufgrund von Umgebungsübertemperatur zuverlässig vermieden wird.

Erfindungsgemäß wird die genannte Aufgabe bei einer gattungsgemäßen Temperaturschalteinrichtung gelöst durch die kennzeichnenden Merkmale des Anspruchs 1.

Durch die erfindungsgemäße Ausgestaltung wird erreicht, daß nach Abschalten des ersten Temperaturschalters, der dem Widerstand parallel geschaltet ist, und dem dann erfolgenden Stromfluß durch den parallel geschalteten Widerstand, der eine Temperaturerhöhung bewirkt, die zunächst die zum Abschalten des ersten Temperaturschalters führende Übertemperatur noch erhöht, der zweite vorgesehene Temperaturschalter öffnet und den Stromfluß zum Widerstand unterbricht, so daß dieser keine weitere Heizleistung erbringen und damit keine weitere Wärme erzeugen kann, so daß unzulässige Übertemperaturen, die Bimetallscheiben, Vergußmassen oder Lötungen beeinträchtigen können, vermieden werden.

In bevorzugten Ausgestaltungen ist vorgesehen, daß die Reihenschaltung des zweiten Temperaturschalters und des Widerstandes parallel zum Temperaturschalter angeordnet ist. Eine weitere bevorzugte Ausgestaltung sieht vor, daß die beiden Temperaturschalter nebeneinander auf einem gemeinsamen wärmeleitenden Träger angeordnet sind.

Gemäß weiterer Ausgestaltung ist vorgesehen, daß ein Kontaktteil jedes Bimetallschalters sein Gehäuse ist und der Träger stromleitend ausgebildet ist sowie daß der Träger einander gegenüberliegend U-förmig über die Bimetallschalter gebogene Laschen sowie weitere diese haltende Laschen aufweist.

Andere Ausgestaltungen sehen vor, daß die beiden Bimetallschalter axial übereinander angeordnet sind bzw., daß einer der Bimetallschalter ein Abstandsglied aufweist und die Bimetallschalter durch einen Niet als mechanisches Halte- und elektrisches Verbindungsglied miteinander verbunden sind.

Miniatur-Temperaturschalter sind an sich in verschiedener Ausgestaltung aus den folgenden deutschen Offenlegungsschriften bekannt: 17 90 103, 21 21 802, 24 33 901, 24 42 090, 24 42 397, 25 05 966, 25 11 314, 26 44 411, 29 17 482, 31 22 899. Zu Details wird auf die dortigen Druckschriften verwiesen, deren Inhalt zum Offenbarungsgehalt der vorliegenden Anmeldung gemacht wird. Es handelt sich um sehr kleine kompakte Temperaturschalter mit einem Gehäuse und einem topfförmigen Unterteil und einem dieses schließenden Oberteil, wobei im Gehäuse ein Schaltwerk oder -element angeordnet ist, das einen oder mehrere Kontakte aufweist, die durch eine Bimetallscheibe zentral getragen und geschaltet werden. Ein derartiger Temperaturwächter hat Abmessungen im Bereich einiger Millimeter, so typischerweise einen Durchmesser von 5 bis 8 mm und eine Höhe von weniger als 5 mm. Soweit nur ein Kontaktpaar aus beweglichem Kontaktteil und stationärem Gegenkontaktteil vorhanden ist, kann der Stromfluß in einfachster Form über die Bimetallscheibe selbst erfolgen, erfolgt vorzugsweise aber über eine zusätzliche Federschnappscheibe zum topfförmigen Gehäuse. Bei zwei beweglichen Kontakten mit entsprechendem Gegenkontakt werden diese von einem gemeinsamen, durch die Bimetallscheibe bewegten Trägerglied getragen und der Stromfluß erfolgt direkt. Von den Gegenkontakten, die in der Regel am Festteil angeordnet sind, ist der Strom über ein Stromübertragungsglied an ein oder mehreren äußeren Anschlußkontakten abgreifbar. Es sind Temperaturschalter, nämlich Temperaturbegrenzer bekannt, die nur den elektrischen Kontakt unterbrechen und entweder zur erneuten Herstellung der elektrischen Verbindung von Hand rückschaltbar sind oder aber ausgetauscht werden. Es sind Temperaturwächter bekannt, die sich nach wesentlicher Temperaturänderung selbsttätig wieder zurückschalten und die elektrische Verbindung wieder herstellen. Es kann dann passieren, daß nach Abkühlung der Bimetallscheibe diese wieder zurückschaltet und die elektrische Verbindung wieder herstellt, ohne daß der Fehler, der direkt aufgrund erhöhten Stromflusses oder indirekt erhöhter Temperaturentwicklung und damit der Trennung der elektrischen Verbindung durch die Bimetallscheibe geführt hat, behoben ist. Es kommt dann bei diesen Schaltern zu sogenannten Reglertakten.

In weiterer bevorzugter Ausgestaltung ist die erfindungsgemäße Schalteinrichtung ausgebildet durch-ein Gehäuse mit einem topfförmigen Unterteil und einem Deckteil, wobei im Unterteil ein Schaltwerk mit mindestens einer Bimetallscheibe und einem beweglichen Kontaktteil angeordnet ist und wobei unter Einwirkung der Bimetallscheibe das bewegliche Kontaktteil mit einem stationären Gegenkontakt in Verbindung bringbar ist, so daß eine elektrische Verbindung zwischen Unterteil, beweglichem Kontaktteil und Gegenkontaktteil herstellbar ist, und wobei zwischen Gegenkontaktteil und Unterteil eine permanent höherohmige, elektrische Verbindung durch das parallel geschaltete Widerstandsteil besteht. Hierdurch können Miniatur-Temperaturschalter als selbsthaltende Temperaturschalter ausgebildet werden. Dabei werden die kleinen Abmessungen dieser Schalter und die Anordnung in einem geschlossenen kleinen Gehäuse beibehalten und es wird eine wirksamere Wärmeerzeugung zum sicheren Offenhalten des Schalters erzielt.

Zur optimalen Lösung der Aufgabe geht die Ausgestaltung nicht den Weg, die äußeren Anschlußkontakte, die mit Anschlußdrähten verbunden sind, durch einen hochohmigen Widerstand zu überbrücken, wie dies im übrigen bei bekannten offenen Schaltern in der Regel getan wird, um diese selbsthaltend auszubilden. Dies würde bei den erfindungsgemäßen Miniaturschaltern zu einer wesentlichen Vergrößerung der gesamten Baugruppe führen, so daß diese letztendlich nicht mehr für die vorgesehenen Zwecke einsetzbar wären. Nachteilig wäre bei einer solchen Ausbildung auch, daß der Wärmeübergang von dem hochohmigen Widerstand zur Bimetallscheibe äußerst schlecht wäre. Die Erfindung schlägt demgegenüber vielmehr eine integrierte Lösung mit integrierter Ausbildung des hochohmigen Widerstandes im vorhandenen Gehäuse vor.

Eine äußerst bevorzugte Ausgestaltung sieht vor, daß die elektrische Leitfähigkeit des Widerstandes einstellbar ist. Hierdurch kann mit einem Widerstand, der für verschiedene Schalter, die bei gleichem konstruktivem Aufbau Bimetallscheiben mit unterschiedlichen Schalttemperaturen aufweisen, ein einziger hochohmiger Widerstand verwendet werden, der je nach der verwendeten Bimetallscheibe und deren Schalttemperatur eingestellt und an diese angepaßt wird. In bevorzugter Ausführung ist vorgesehen, daß der Widerstand ein in Spiralbögen geführter Metall- oder Kohlenstoffwiderstand ist, wobei insbesondere vorgesehen sein kann, daß der Widerstand aus einer Metallscheibe ausgestanzt ist bzw. er als Kohlewiderstand in Form einer Schicht auf einem Träger aufgebracht, insbesondere aufgedruckt, ist und von einer erstarrten Glasschmelze abgedeckt ist. Zur Einstellung sieht eine äußerst bevorzugte Ausgestaltung vor, daß zwischen einzelnen Abschnitten des Widerstands Brücken bestehen, die entfernbar sind.

In bevorzugter Ausgestaltung schlägt also die Erfindung vor, daß das bisher ausschließlich isolierende Deckteil, das eine mechanische Verbindung zwischen dem stationären Gegenkontakt bzw. dem mit diesem verbundenen Stromübertragungsglied vom stationären Gegenkontakt zu einem äußeren Anschlußkontaktteil und dem Gehäuseunterteil herstellt, als hochohmiger Widerstand ausgebildet oder mit einem solchen versehen wird, so daß eine hochohmige Verbindung zwischen dem stationären Gegenkontakt und dem metallischen Gehäuseunterteil hergestellt wird.

Die Erfindung sieht weiterhin die Verwendung einer Temperaturschalteinrichtung nach dem Anspruch 24 und eines selbstrückstellbaren Temperaturschalters gemäß dem Anspruch 25 vor.

Der erfindungsgemäße Temperaturschalter ist insbesondere an schwer zugänglichen Stellen einsetzbar, an denen darüber hinaus wenig Platz besteht und/oder Verschmutzungen zu befürchten sind. Er kann insbesondere innerhalb von Wicklungen von Elektromotoren, aber auch bei Druck vor Lampen und in Heizgeräten eingesetzt werden. Ein besonderer Vorteil ergibt sich durch die Kombination von gekapselter Kleinstausführung und Selbsthalten dahingehend, daß der Temperaturschalter von Hand rückstellbare Temperaturschalter ersetzen kann, die alleine aufgrund der Rückstelleinrichtung relativ großen Raumbedarf hatten, der durch den erfindungsgemäßen Temperaturschalter bei gleicher Sicherheit reduziert werden kann.

Weitere Vorteile und Merkmale der Erfindung ergeben sich aus den Ansprüchen und aus der nachfolgenden Beschreibung, in der zwei Ausführungsbeispiele des erfindungsgemäßen Temperaturschalters unter Bezugnahme auf die Zeichnungen im einzelnen erläutert sind. Dabei zeigt:
- Fig. 1: eine erste Ausführungsform des Temperaturschalters für eine erfindungsgemäße Temperaturschalteinrichtung im Schnitt;
- Fig. 2: eine andere Ausführungsform eines Temperaturschalters im Schnitt;
- Fig. 3: einen Schnitt entsprechend III-III in der Figur 2 im wesentlichen durch das Widerstandselement;
- Fig. 4: eine weitere Ausführungsform eines Temperaturschalters in einem Schnitt entsprechend dem Schnitt der Fig.1 und
- Fig. 5: eine Aufsicht auf das Deckteil der Ausgestaltung nach Fig.4 entsprechend der Pfeile V - V;
- Fig. 6: einen Schnitt entsprechend dem der Fig. 4 durch eine Ausführungsform ähnlich der der Fig.4 mit einer zusätzlichen Isolierscheibe;
- Fig. 7: eine Seitenansicht eines erfindungsgemäßen Schalters mit vergossenem Deckteil,
- Fig. 8: an Hand eines Diagramms die Darstellung der der Erfindung zugrunde liegenden Problematik und die Wirkung der erfindungsgemäßen Lösung;
- Fig. 9: eine erste Ausgestaltung der erfindungsgemäß vorgesehenen Reihenschaltung;
- Fig.10: eine weitere Ausgestaltung der erfindungsgemäß vorgesehenen Reihenschaltung;
- Fig.11: eine erste praktische Ausgestaltung einer Temperaturschalteinrichtung nach Fig.9; und
- Fig.12: eine zweite praktische Ausgestaltung einer Temperaturschalteinrichtung nach Fig.9.

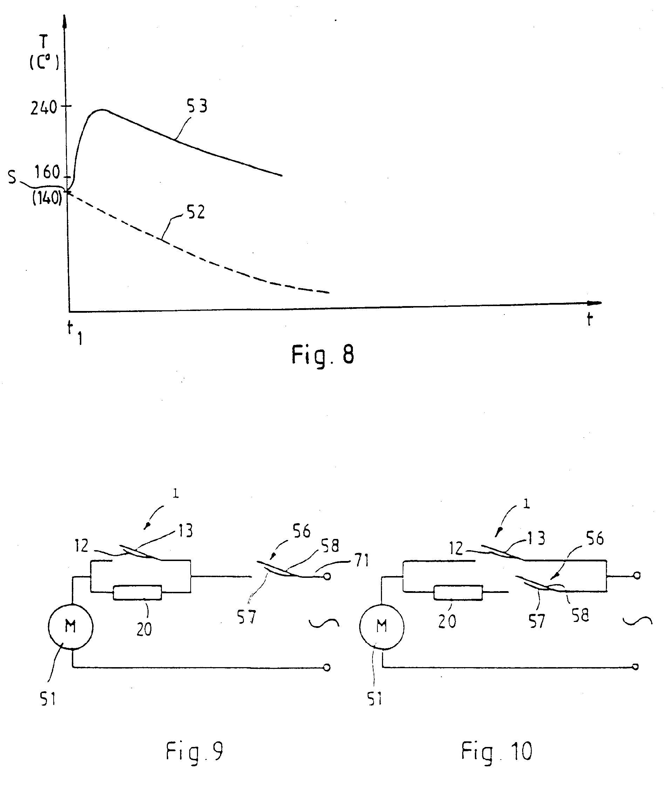

Im folgenden wird zunächst auf die Figuren 8 bis 10 eingegangen:

Bei einer herkömmlichen Temperaturschalteinrichtung in Form eines Temperaturwächters mit einem durch ein Bimetallelement 12 betätigbaren Schaltglied, beispielsweise in Form einer Federschnappscheibe 13 und hierzu parallel geschaltetem ohmschen Widerstand 20, im Versorgungskreis für einen Motor 51 erfolgt bei Erreichen der Schalttemperatur S von beispielsweise 140 Grad aufgrund einer nicht zulässigen Erwärmung des Motors 51, beispielsweise aufgrund einer Beschädigung od.dgl., ein Öffnen des Temperaturschalters, so daß die Motor- oder Umgebungstemperatur 52 entsprechend der in Fig.8 in der Kurve 52 angedeuteten Weise an sich abfällt. Damit der Temperaturschalter nicht taktet, ist diesem, wie gesagt, der Widerstand 20 parallel geschaltet, über den nun der gesamte Stromfluß stattfindet und der sich aufheizt. Durch Überlagerung der durch den Widerstand 20 erzielten Temperatur und der Umgebungstemperatur 52 ergibt sich in dem Temperaturschalter 1 ein Temperaturverlauf 53, wie er in der Fig.8 dargestellt ist, mit einem erheblichen Überschwingen der Temperatur bis auf beispielsweise 240 Grad, da der Widerstand 20 ja eine solche Heizleistung haben soll, daß auch noch bei niedrigen Umgebungstemperaturen durch die Heizleistung des Widerstandes 20 die Schalteinheit 12,13 offengehalten wird und nicht taktet. Es muß hier ein weiterer Umgebungstemperaturbereich, beispielsweise bei einem Motor für einen Rolladenantrieb, abgedeckt werden können. Das Überschwingen kann dazu führen, daß Temperaturen erreicht werden, wie dargestellt beispielsweise bis zu 240 Grad im Temperaturschalter 1, die irreversible Beschädigungen am Bimetallelement 12 hervorrufen können und im übrigen auch für Vergußharzmassen zu hoch sein können.

Die Erfindung schlägt nun vor, daß zumindestens in Reihe zum ohmschen Widerstand 20 ein (weiterer) selbstrückstellbarer Temperaturschalter 56 mit einem Bimetallschaltglied 57 und einem Kontaktteil 58 geschaltet ist, welcher eine Öffnungstemperatur oberhalb dem Temperaturschaltpunkt S des Bimetallelementes 12, aber unterhalb von Vergußharz und/oder Bimetallelemente 12,57 beeinträchtigenden Temperaturen hat, beispielsweise von 180 Grad, wie dies in der Fig. 8 eingezeichnet ist. Wenn nun die Temperatur aufgrund der Umgebungstemperatur und der durch den Widerstand 20 erzeugten Wärme nach Öffnen des Temperaturschalters 1 die Schalttemperatur des in Reihe geschalteten Temperaturschalters 56 beispielsweise 180 Grad erreicht, so öffnet sich dieser ebenfalls, so daß die Stromversorgung des ohmschen Widerstandes 20 unterbrochen und damit der Temperaturanstieg entsprechend dem Temperaturverlauf 53 verhindert wird, der Temperaturverlauf vielmehr sehr schnell wieder dem Temperaturverlauf 52 der Fig.8 entspricht. Im Gegensatz zu dem ersten Temperaturschalter 1 kann der Temperaturschalter 56 eine größere Hysterese aufweisen.

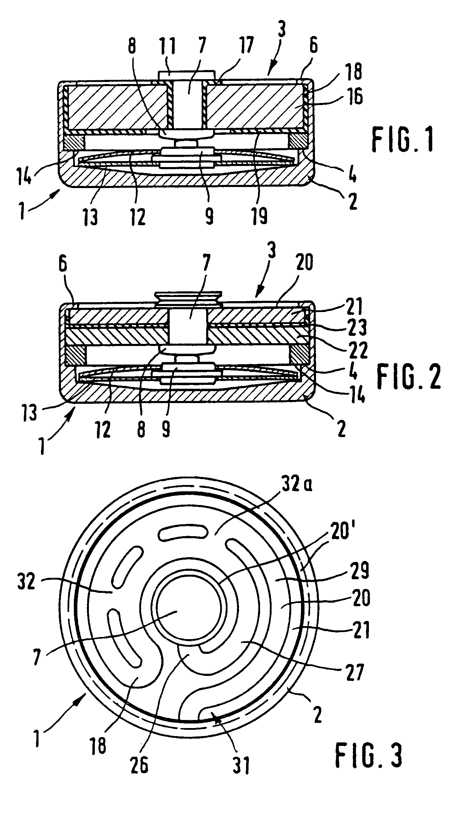

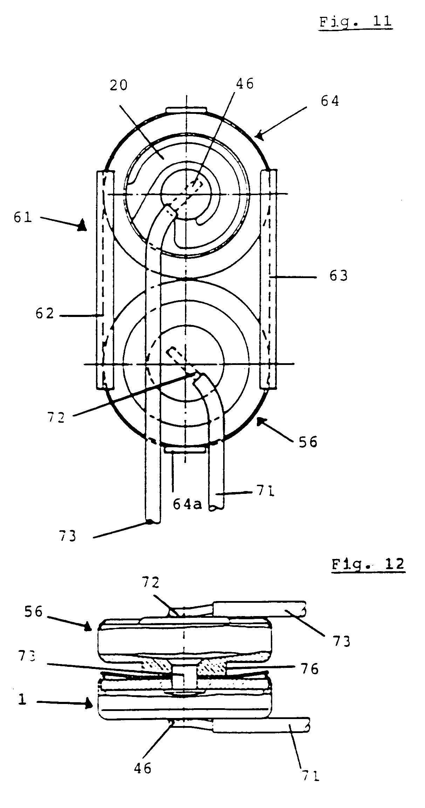

Die Wächtereinrichtung 56 kann entweder, wie dies in Fig. 9 dargestellt ist, in Reihe mit dem gesamten Temperaturschalter 1 angeordnet sein oder aber lediglich in Reihe zum Widerstand 20, aber parallel zum Temperaturschalter 1, wie dies in Fig.10 dargestellt ist. Eine konkrete Ausführungsform der Schaltung nach Fig.9 ist in Fig.11 dargestellt. Es ist hier eine selbsthaltende Temperaturschalteinrichtung 61 vorgesehen, bei der durch ein gemeinsames bügelförmiges Halteteil 62 mit seitlichen Laschen 63 und Stirnlaschen 64a auf diesen einerseits der selbsthaltende Temperaturschalter 1 (mit den Funktionselementen 12,13 und 20) (Fig. 1) gehalten ist und andererseits der hierzu in Reihe geschaltete zusätzliche Temperaturwächter 56. Das Halteteil 61 kann sowohl strom- als auch wärmeleitend sein, wenn es beispielsweise aus Metall besteht, so daß der Stromfluß von der Leitung 71 über die Anschlußlasche 46, den Temperaturschalter 1, dessen Gehäuse, das Halteteil 61, das Gehäuse des Temperaturschalters 56, dessen Schaltelement und den Anschluß 72 sowie die Leitung 73 erfolgt.

Eine andere Ausgestaltung einer Schalteinrichtung nach der Figur 9 ist in der Figur 12 dargestellt. Hier sind die beiden Teilwächter 1,56 übereinander angeordnet, wobei sie durch einen Niet 73 als mechanisches Halte- und Stromübertragungsglied miteinander verbunden sind.

Während der Temperaturschalter 56 in an sich bekannter Weise ausgebildet ist, kann der selbsthaltende Temperaturschalter 1 in äußerst bevorzugter Ausgestaltung in der nachfolgend unter Bezugnahme auf die Figuren 1 bis 7 beschriebenen Weise ausgebildet sein.

Die erfindungsgemäßen Temperaturschalter der Figuren 1 und 2 sind im wesentlichen kreisförmig ausgebildet, wie für den Temperaturschalter nach der Figur 2 aus der Figur 3 entnehmbar ist.

Die Temperaturschalter weisen ein Gehäuse mit einem topfförmigen Unterteil 2 und einem dieses verschließenden Deckteil 3 auf. Das Deckteil 3 sitzt in an sich bekannter Weise entweder direkt oder indirekt auf einen umlaufenden Absatz 4 des Unterteils auf und wird gegen diesen durch eine auf der gegenüberliegenden Seite des Deckteils 3 vorgesehene Umkrimpung 6 oder Bördelung des Unterteils 2 gedrückt. Bei bekannten Temperaturschaltern besteht das Deckteil aus Isoliermaterial, wie ein Keramik- oder auch Kunststoffteil, oder aber es ist, soweit es leitend ist, gegenüber dem topfförmigen Unterteil elektrisch isoliert eingesetzt. In letzterem Falle dient der elektrisch leitende Teil des Deckteiles als Gegenkontaktteil (beispielsweise DE-OS 29 17 482). Im erstgenannten Fall ist das Deckteil 3 durch ein oder mehrere Stromübertragungsglieder 7 durchsetzt, die nach innen hin ein stationäres Gegenkontaktteil 8 zu einem beweglichen Kontaktteil 9, nach außen hin ein Anschlußkontaktelement 11 tragen und elektrisch miteinander verbinden.

Im Gehäuseunterteil 2 sitzt im dargestellten Ausführungsbeispiel eine Bimetallscheibe 12 sowie eine Federschnappscheibe 13 ein, die in zentralen Durchbrüchen das bewegliche Kontaktteil 9 umgeben und tragen. In der dargestellten Position ist die Bimetallschnappscheibe 12 entlastet und das Kontaktteil 9 wird durch die Federschnappscheibe 13 gegen den stationären Gegenkontakt 8 gedrückt. Bei Überschreiten einer vorgegebenen Temperaturgrenze springt die Bimetallscheibe 12 um, kommt dabei an einem Absatz 14 mit ihrem Außenrand zur Anlage und drückt den Kontakt 9 entgegen der Wirkung der Federschnappscheibe 13 vom Gegenkontakt 8 ab, so daß der Stromfluß, der in der dargestellten Schließstellung vom Anschlußkontakt 11 über das Verbindungsteil 7, den Gegenkontakt 8, den beweglichen Kontakt 9, die Federschnappscheibe 13 zum Gehäuse 2, an dem der weitere externe Anschluß angeschlossen werden kann, geführt ist, unterbrochen wird.

Bei der Ausgestaltung der Figur 1 weist das Deckteil 3 nun einen Widerstand 16, wie einen Dickschichtwiderstand auf, welcher das Stromübertragungsglied 7 umschließt und trägt und einerseits mit diesem sowie andererseits bei der Umkrimpung 6 mit dem Gehäuseunterteil 2 in elektrischer Verbindung steht. Um hier bei vorgegebenen geometrischen Abmessungen den Stromflußweg über den Widerstand 16 und damit den durch diesen bewirkten elektrischen Widerstand im Stromflußweg möglichst groß zu machen, ist zwischen Widerstand 16 und Stromübertragungsglied 7 eine isolierende Hülse angeordnet, so daß der Widerstand 16 nur im inneren unteren Bereich mit dem stationären Gegenkontakt 8 in elektrischer Verbindung steht. In gleicher Weise ist zwischen der Umfangswand des Widerstands 16 und der achsparallelen Gehäusewand des Gehäuseunterteils 2 Isoliermaterial 18 angeordnet, welches im übrigen noch im Bereich 19 unter den Widerstand 16 gezogen ist. Dies führt dazu, daß die Kontaktierung des Widerstands 16 mit dem Gehäuseunterteil 2 lediglich im Bereich des oberen Außenumfanges, bei der Umkrimpung 6 erfolgt.

Wenn der Temperaturschalter geschlossen ist (dargestellte Stellung), so fließt der Strom in der oben angegebenen Weise über den Kontakt 9 und die Federschnappscheibe 13, wogegen ein Stromfluß über den Widerstand 16 vernachlässigbar ist, da dessen Widerstand gegenüber dem vorgenannten Stromweg relativ groß ist. Öffnet nun der Schalter durch Abheben des Kontakts 9 vom Gegenkontakt 8, so fließt ein durch den Widerstand des Widerstands 16 bestimmter Strom über diesen und erwärmt ihn. Durch die Erwärmung wird eine Temperatur aufrechterhalten, in der die Bimetallschnappscheibe 12 den Kontakt 9 vom Gegenkontakt 8 abhält, so daß dieser Stromweg weiterhin unterbrochen bleibt. Ein Zurückschnappen der Bimetallscheibe 12 ist erst möglich, wenn von Hand die über den Wächter 1 anliegende Spannung unterbrochen wird, so daß auch über den Widerstand 16 kein Strom mehr fließen kann. Durch die Abkühlung kann die Bimetallscheibe 12 dann wieder in ihre dargestellte entlastete Stellung zurückspringen, so daß die Verbindung zwischen Kontakt und Gegenkontakt unter Einwirkung der Federschnappscheibe 13 wieder hergestellt ist. Nach erneutem Anlegen der Spannung kann Strom dann wieder über den Gegenkontakt 8 in den Kontakt 9 fließen.

Beim Ausführungsbeispiel der Figur 2 ist ein Widerstand 20 derart auf einem Keramikträger 21 angeordnet, daß es eine hochohmige leitende Widerstandsverbindung zwischen dem Stromübertragungsglied 7 und der Wand des Gehäuseunterteils 2 bildet. Um einen angestrebten großen elektrischen Widerstand des Widerstands 20 zu erzielen, verbindet dieses nicht das Stromübertragungsglied 7 direkt radial mit dem Gehäuseunterteil 2, sondern weist eine gebogene oder schlangenlinienförmige Form mit teilringförmigen Unterbrechungsbereichen auf, wie dies in Figur 3 gezeigt ist. Der Widerstand 20 weist Kontaktringe 20′ auf und kontaktiert mit einem solchen das Stromübertragungsglied 7 bei 26, verläuft dann ein Stück radial und weiterhin zunächst in einem teilringförmigen Kreis 27 bis kurz vor das Ansatzstück 26, bei 28, dort wieder etwas weiter radial nach außen und dann in einem zweiten ringförmigen Teil 29 bis zu einem radial außerhalb des Bereichs 26 liegenden Bereich 31 und dort wieder radial bis zur Anlage an der Wand des Unterteils 2, wo der äußere Kontaktring 20′ das Unterteil 2 über dessen Umkrimpung 6 kontaktiert. Unterhalb des Keramikträgers 21 ist ein weiteres Keramikteil 22 angeordnet, zwischen denen zur Abdichtung eine Zwischenlage 23 aus Teflon, Kapton od.dgl. angeordnet ist, die leicht nach oben gebogen und zwischen der Wand des Unterteils 2 und dem Isolierträger 21 eingespannt ist (Figur 2,rechts). Die Zweige 27, 29 sind mit radialen Verbindungsstücken 32 versehen. Wenn alle radialen Verbindungsstücke 32 beibehalten werden, so kann der Stromfluß über das erste radiale Verbindungsstück 32a führen und der Widerstand ist gering. Es können aber auch angefangen mit dem radialen Verbindungsstück 32a diese Verbindungsstücke herausgebrochen werden, wodurch sich der Widerstand des Widerstandelements 20 erhöht, und er derart auf einen gewünschten Wert stufenweise eingestellt werden kann. Auch hier entsteht im Widerstand 20 Wärme, die dazu beiträgt, die Bimetallschnappscheibe 12 in ihrer Hochtemperaturstellung und damit den Schalter in seiner Offenstellung zu halten.

Beim dargestellten Ausführungsbeispiel wurden zunächst zwei ringförmige metallische Kontaktierungen 20′ an äußerer und innerer Umfassung des ringförmigen Keramikträgers eingebaut. Der Widerstand 20 ist ein auf den Keramikträger 21 aufgebrachter Kohlewiderstand, der zunächst als eine Kohlenstoff und Glasmasse enthaltende Masse in der beschriebenen Kontur auf die Oberfläche des Keramikträgers aufgebracht wurde. Unter Erhitzung schmilzt die Glasmasse und deckt als Deckschicht den Kohlenstoff auf dessen Oberseite isolierend ab, wobei es ihn in der aufgebrachten Kontur fixiert. Die Verbindungsstücke 32a können mittels Sand- oder Laserstrahlen aufgetrennt werden - und zwar, da der Widerstand 20 auf der Oberseite des Keramikträgers 21 angeordnet ist - auch nach der Montage des Schalters, so daß nachträglich Widerstandsänderungen oder -korrekturen vornehmbar sind, wie aus einer Silberpaladium-Legierung.

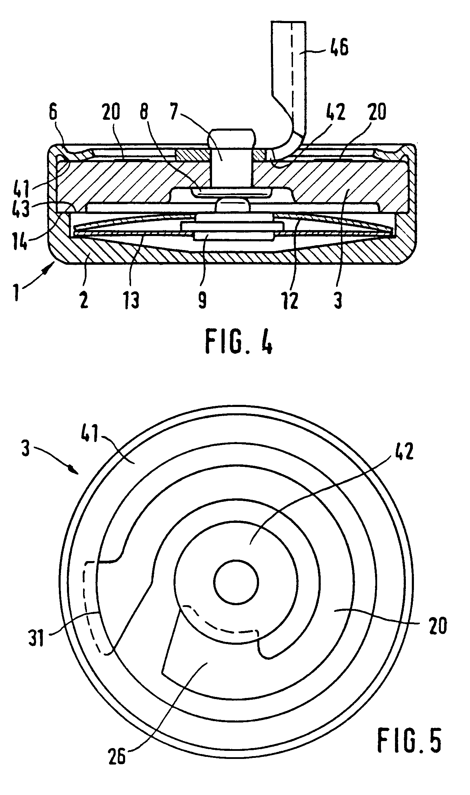

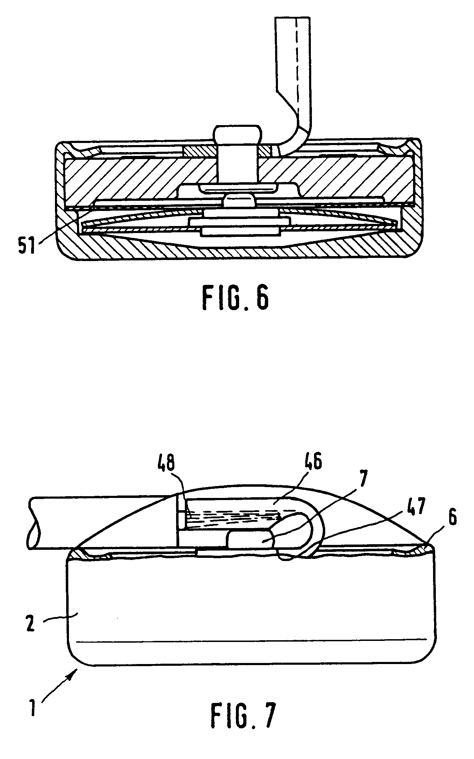

Bei der Ausgestaltung der Figuren 4 und 5 ist in das topfförmige Unterteil 2 des Gehäuses 1 ein einstückiges Deckteil 3 eingesetzt, das aus Oxid-Keramik besteht und den Keramikträger für den Widerstand 20 bildet. Der Widerstand 20 besteht aus einer auf das Deckteil 3 aufgedruckten Silberschicht, die weiterhin eingebrannt sein kann. Kontakt- oder Anschlußbereiche 26 sind bei dieser Ausführungsform umfangsmäßig verbreitert ausgebildet, so daß eine gute Kontaktierung mit Kontaktringen 41, 42 gegeben ist. Der Kontaktring 41 dient zur Herstellung der elektrischen Verbindung zum Gehäuseunterteil 2, während der Kontaktring 42 die elektrische Verbindung zum Gegenkontaktteil 8 oder Stromübertragungsglied 7 herstellt. Diese Kontaktierungen können nur noch dadurch unterstützt sein, daß in den Bereichen 41,42 weiterhin eine Zinnschicht vorgesehen ist, die zunächst ebenfalls aufgedruckt wurde und anschließend bis über die Fließgrenze des Zinns hin erhitzt wurde. Das Zinn fließt damit in die Zwischenräume zwischen Unterteil 2 und Deckteil 3 einerseits und zwischen Deckteil 3 und Stromübertragungsglied 7 andererseits und stellt so neben der guten elektrischen Kontaktierung eine Abdichtung zum Inneren des Gehäuses 1 her, die andere Abdichtungsmaßnahmen, wie beispielsweise Dichtungsringe (siehe auch Figur 6) zwischen dem Absatz 14 des Unterteils und der zugeordneten Schulter 43 des Deckteils 3, die ebenfalls vorgesehen sein können, unterstützt, zum Teil entbehrlich macht. Auch bei diesem Ausführungsbeispiel ist der obere Rand des Unterteils in Form einer Bördelung 6 nach innen umgebogen. Durch eine Verzinnung der Leiterbahn zumindestens im Ringbereich 41 kann beim Bördeln die Bördelung 6 in das relativ weiche Zinn eindrücken und damit ebenfalls sowohl zur Dichtigkeit als auch zur elektrischen Kontaktierung in einfacher und bequemer Weise beitragen. Weiterhin kann dann durch Verlöten mit dem Unterteil 2 im Bereich der Bördelung 6 und/oder dem Stromübertragungsglied 7 (Anschluß- bzw. Kontaktnut) praktisch eine hermetische Abdichtung erreicht werden. Zur Kontaktierung an eine Litze ist bei diesem Ausführungsbeispiel das Stromübertragungsglied 7 mit einer senkrecht von der Gehäuseoberfläche vortragenden Anschlußlasche 46 über ein Fußteil 47 derselben versehen, die in bevorzugter Weise die Anschweißung der Anschlußlitze 48 mit den hierbei gegebenen Temperaturen ermöglicht, ohne daß eine Überhitzung des Schaltwerks des Temperaturwächters zu befürchten ist, da durch die Ausgestaltung der Anschlußlasche 46 die beim Schweißen gegebene Wärmequelle relativ weit ab vom Schaltwerk angeordnet ist. Erst anschließend wird die Anschlußlasche 46 umgebogen, so daß sich parallel zu ihrem am Stromübertragungsglied 7 angreifenden Fußteil 47 in entgegengesetzter Richtung zu diesem über den Deckteil 3 erstreckt (Fig. 7). Der zweite Anschluß wird durch Anlöten einer weiteren Litze am Unterteil 2 vorgenommen (nicht dargestellt). Das Deckteil 3 wird mit dem gesamten Anschlußbereich - gebildet durch die Teile 7,46,47,48 - mittels einer üblichen Vergußmasse vergossen, die im dargestellten Ausführungsbeispiel transparent ist, aber auch undurchsichtig sein kann.

Das eigentliche Widerstandselement 20 kann noch durch ein Isolatormaterial abgedeckt sein, beispielsweise durch Aufbringen eines Lackes, eines Kunststoffs oder dergleichen.

Die Figur 1 zeigt eine der Figur 4 konstante ähnliche Ausgestaltung, so daß hinsichtlich gleicher Teile auf obige Ausführungen verwiesen werden kann. Es ist lediglich weiterhin eine Dichtungsscheibe 51 aus thermostabilem Polyimid (Kapton) zwischen dem Unterteil 2 und dem Deckteil 3 eingelegt und zwischen dessen Absatz 14 und Schalter 43 eingespannt, so daß eine mechanische Abdichtung gegeben ist. Durch diese Ausgestaltung kann in gewissen Fällen auf Abdichtung mittels Zinn und gegebenenfalls Verlöten verzichtet werden, wenn dies auch grundsätzlich zusätzlich vorgesehen sein kann.

Der wesentliche Vorteil des erfindungsgemäßen Temperaturschalters liegt darin, daß er trotz Ausgestaltung als selbsthaltender Temperaturschalter durch seine Ausgestaltung bei Erreichen hoher Dichtigkeit die gleichen äußerst geringen Abmessungen aufweisen kann wie herkömmliche Miniaturbimetall-Temperaturschalter, daß also die Ausgestaltung der "Selbsthaltung" gegenüber herkömmlichen Temperaturschaltern kein zusätzliches Volumen beansprucht. Der erfindungsgemäße Temperaturschalter kann herkömmliche Unterteile, Schaltelemente und Kontakt- und Anschlußteile verwenden, so daß nur wenige Neuteile eingesetzt werden müssen, gegebenenfalls lediglich ein erfindungsgemäßes Deckteil statt einem herkömmlichen, wobei der das Schaltelement überbrückende notwendige hochohmige Widerstand in der erfindungsgemäßen Weise erreicht wird. Der erfindungsgemäße Temperaturschalter kann dort, wo bisher herkömmliche Temperaturschalter eingesetzt werden, diese ohne weiteres und insbesondere ohne zusätzlichen Platzbedarf ersetzen. Die dargestellten Temperaturschalter weisen beispielsweise Durchmesser von 8 bis 9 mm und Höhen von 2 bis 2,5 mm (ohne Vergußmasse und Anschlußlasche; mit diesen 3,5 bis 4 mm), bei einer Deckteilstärke einschließlich Widerstandsbahn 20 von bis zu 1 mm bei ausreichender Isolierung auf.

## Patentansprüche

1. Temperaturschalteinrichtung für ein gegen Übertemperatur aufgrund eines Fehlers zu schützendes elektrotechnisches Teil, wie für einen Motor, beispielsweise einen Motor für Rolladenantriebe oder dergleichen, mit einem ersten Temperaturschalter in Form eines Bimetallschalters (64; 12, 13) und einem zu diesem parallel geschalteten ohmschen Widerstand (16, 20), so daß nach Öffnen des ersten Temperaturschalters (64) aufgrund einer Übertemperatur der Stromfluß über den ohmschen Widerstand (16, 20) erfolgt, dieser Wärme erzeugt und hierdurch der erste Temperaturschalter (64) auch bei Abkühlung der den Schaltvorgang zunächst auslösenden, durch eine Fehlfunktion des zu schützenden elektrotechnischen Teils bewirkten Übertemperatur aufgrund der Wärmeentwicklung des ohmschen Widerstandes (16, 20) offengehalten wird, dadurch gekennzeichnet, daß zumindestens mit dem ohmschen Widerstand (16, 20) ein zweiter, selbst rückstellbarer Temperaturschalter (56, 57, 58) in Reihe geschaltet ist, der eine Öffnungstemperatur oberhalb der des ersten Temperaturschalters (64; 12, 13), aber wesentlich unterhalb irreversible Schädigungen von Bimetallelementen (12, 57) bewirkenden Temperaturen hat, wobei die beiden Temperaturschalter (56, 64) in engem thermischen Kontakt stehen.

2. Schalteinrichtung nach Anspruch 1, dadurch gekennzeichnet, daß der zweite Temperaturschalter (56) in Reihe sowohl zum ersten Bimetallschalter (64) als auch zum ohmschen Widerstand (16, 20) steht.

3. Schalteinrichtung nach Anspruch 1, dadurch gekennzeichnet, daß die Reihenschaltung des zweiten Temperaturschalters (56) und des Widerstandes (16, 20) parallel zum Temperaturschalter (64) angeordnet ist.

4. Schalteinrichtung nach einem der vorangehenden Ansprüche, dadurch gekennzeichnet, daß die beiden Temperaturschalter (56, 64) nebeneinander auf einem gemeinsamen wärmeleitenden Träger (61) angeordnet sind.

5. Schalteinrichtung nach Anspruch 4, dadurch gekennzeichnet, daß bei Ausbildung auch des zweiten Temperaturschalters als Bimetallschalter ein Kontaktteil jedes Schalters (56, 64) sein Gehäuse (1) ist und der Träger (61) stromleitend ausgebildet ist.

6. Schalteinrichtung nach Anspruch 4 oder 5, dadurch gekennzeichnet, daß der Träger einander gegenüberliegend U-förmig über die Temperaturschalter (56, 64) gebogene Laschen (62, 63) sowie weitere, diese haltende Laschen (64a) aufweist.

7. Schalteinrichtung nach einem der Ansprüche 1 bis 3, dadurch gekennzeichnet, daß die beiden Temperaturschalter (56, 64) axial übereinander angeordnet sind.

8. Schalteinrichtung nach Anspruch 7, dadurch gekennzeichnet, daß einer der Schalter ein Abstandsglied (76) aufweist und die Temperaturschalter durch einen Niet (73) als mechanisches Halte- und elektrisches Verbindungsglied miteinander verbunden sind.

9. Schalteinrichtung nach Anspruch 7, dadurch gekennzeichnet, daß Schaltelemente (12, 13; 57, 58) aufnehmende Kammern der Temperaturschalter (56, 64) durch ein Gehäuseteil aus elektrisch leitendem Werkstoff miteinander verbunden sind.

10. Schalteinrichtung nach Anspruch 7 bis 9, dadurch gekennzeichnet, daß ein Gehäuse (1) aus einem zylindrischen Mittelstück (76) und zwei gegen dessen beide Stirnseiten gesetzten Kappen besteht, die jeweils zwischen sich und dem Mittelstück die Kammern für Schaltelemente (12, 13; 57, 58) der Temperaturschalter (56, 64) einschließen.

11. Schalteinrichtung nach einem der Ansprüche 1 bis 10, gekennzeichnet durch ein Gehäuse mit einem topfförmigen Unterteil und einem Deckteil, wobei im Unterteil ein Schaltelement mit mindestens einer Bimetallscheibe und einem beweglichen Kontaktteil angeordnet ist und wobei unter Einwirkung der Bimetallscheibe das bewegliche Kontaktteil mit einem stationären Gegenkontakt in Verbindung bringbar ist, so daß eine elektrische Verbindung zwischen Unterteil, beweglichem Kontaktteil und Gegenkontaktteil herstellbar ist, und wobei zwischen Gegenkontaktteil (7, 8) und Unterteil (2) eine permanente höherohmige elektrische Verbindung durch den parallel geschalteten Widerstand (16, 20) besteht.

12. Schalteinrichtung nach einem der Ansprüche 1 bis 11, dadurch gekennzeichnet, daß die elektrische Leitfähigkeit des Widerstandes (16, 20) einstellbar ist.

13. Schalteinrichtung nach einem der Ansprüche 1 bis 12, dadurch gekennzeichnet, daß der Widerstand ein in Spiralbögen geführter Metallwiderstand ist.

14. Schalteinrichtung nach Anspruch 13, dadurch gekennzeichnet, daß der Widerstand (20) aus einer Metallscheibe ausgestanzt ist.

15. Schalteinrichtung nach einem der Ansprüche 1 bis 14, dadurch gekennzeichnet, daß der Widerstand (16) ein Widerstand aus Kohlenstoff ist.

16. Schalteinrichtung nach einem der Ansprüche 1 bis 15, dadurch gekennzeichnet, daß der Widerstand (16, 20) durch eine Isolatorabdeckung umschmolzen oder vergossen ist.

17. Schalteinrichtung nach Anspruch 13, dadurch gekennzeichnet, daß zwischen einzelnen Abschnitten (27, 29) des Widerstands (20) Brücken (32, 32a) bestehen, die entfernbar sind.

18. Schalteinrichtung nach einem der vorangehenden Ansprüche, dadurch gekennzeichnet, daß der Widerstand (16, 20) auf einem Träger aus Isolatorstoff (22, 23) angeordnet ist.

19. Schalteinrichtung nach Anspruch 18, dadurch gekennzeichnet, daß der Träger aus Keramik ist.

20. Schalteinrichtung nach Anspruch 18 oder 19, dadurch gekennzeichnet, daß der Widerstand auf den Träger aufgedruckt ist.

21. Schalteinrichtung nach einem der vorangehenden Ansprüche, dadurch gekennzeichnet, daß die Schaltelemente (12, 13) durch eine Dichtung (19, 23, 51), wie eine Dichtungsscheibe, abgedichtet sind.

22. Schalteinrichtung nach einem der vorangehenden Ansprüche, gekennzeichnet durch eine Abdichtung durch Verlöten.

23. Motor, insbesondere für Rolladenantriebe oder dergleichen, mit einer selbsthaltenden Temperaturschalteinrichtung nach einem der vorangehenden Ansprüche.

24. Verwendung einer Temperaturschalteinrichtung mit einem ersten durch einen parallel geordneten ohmschen Widerstand selbsthaltend ausgebildeten Temperaturschalter in Form eines Bimetallschalters und mit einem zumindestens mit dem ohmschen Widerstand in Reihe geschalteten zweiten, selbstrückstellbaren Rückschalter, der eine Öffnungstemperatur oberhalb der des ersten Temperaturschalters, aber wesentlich unterhalb irreversible Schädigungen von Bimetallelementen bewirkenden Temperaturen hat, wobei die beiden Temperaturschalter in engem thermischen Kontakt stehen,
zum Schutz eines gegen Übertemperatur aufgrund eines Fehlers zu schützenden elektrotechnischen Teils, wie eines Motors, beispielsweise eines Motors für Rolladenantriebe oder dergleichen.

25. Verwendung eines selbstrückstellbaren Temperaturschalters mit einer Öffnungstemperatur oberhalb der eines anderen, durch einen parallel geordneten ohmschen Widerstand selbsthaltend ausgebildeten Temperaturschalters in Form eines Bimetallschalters, aber wesentlich unterhalb irreversible Schädigungen von Bimetallelementen bewirkenden Temperaturen
zum Schutz des selbsthaltenden Temperaturschalters gegen durch den parallel geschalteten ohmschen Widerstand bewirkte Übertemperatur.

## Claims

1. Temperature sensitive switch for an electrotechnical device to be protected against an excess temperature due to a fault, such as for a motor, e.g. a motor for roller blind drives or the like, comprising a first temperature sensitive switch in the form of a bimetallic switch (64; 12, 13) and an ohmic resistor (16, 20) connected in parallel thereto, so that after opening of the first bimetallic switch (64) as a result of an excess temperature the current flows through the ohmic resistor (16, 20) which produces heat and whereby as a result of the evolution of heat of the ohmic resistor (16, 20) the first temperature sensitive switch (64) is kept open even in the case of the cooling down of the excess temperature initially triggering the switching process and resulting of a malfunction of the electrotechnical device to be protected,
characterized in that there is connected in series at least with the ohmic resistor (16, 20) a second, automatically resettable temperature sensitive switch (56, 57, 58) having an opening temperature above that of the first temperature sensitive switch (64; 12, 13), but well below temperatures causing irreversible damage to bimetallic elements (12, 57), the two temperature sensitive switches (56, 64) being in close thermal contact with each other.

2. Switching device according to claim 1, characterized in that the second temperature sensitive switch (56) is connected in series both with the first bimetallic switch (64) as well as with the ohmic resistor (16, 20).

3. Switching device according to claim 1, characterized in that the series connection of the second temperature sensitive switch (56) and the ohmic resistor (16, 20) is arranged in parallel to the temperature sensitive switch (64).

4. Switching device according to any of the preceding claims, characterized in that the two temperature sensitive switches (56, 64) are juxtaposed on a common, heat conducting support (61).

5. Switching device according to claim 4, characterized in that in case the second temperature sensitive switch is also in the form of a bimetallic switch a contact part of each switch (56, 64) forms the casing (1) thereof, the support (61) being current-conducting.

6. Switching device according to claim 4 or claim 5, characterized in that the support comprises U-shaped clips (62, 63) facing each other and bent over the temperature sensitive switches (56, 64), as well as further clips (64a) holding the same.

7. Switching device according to any of claims 1 through 3, characterized in that the two temperature sensitive switches (56, 64) are axially superimposed.

8. Switching device according to claim 7, characterized in that one of the switches comprises a spacer (76), and the temperature sensitive switches are interconnected by a rivet (73) serving as a mechanical holding and electrical connecting member.

9. Switching device according to claim 7, characterized in that switching elements (12, 13; 57, 58) receiving chambers of the temperature sensitive switches (56, 64) are interconnected by a casing part of electrically conductive material.

10. Switching device according to claims 7 through 9, characterized in that a casing (1) comprises a cylindrical central piece (76) and two caps placed against the two ends thereof and enclosing between them and the central piece the chambers for switching elements (12, 13; 57, 58) of the temperature sensitive switches (56, 64).

11. Switching device according to any of claims 1 through 10, characterized by a casing with a cup-shaped lower part and a cover part, the lower part housing a switching element with at least one bimetallic disk and a movable contact part, whereby under the action of the bimetallic disk the movable contact part can be brought into connection with a stationary opposite contact, so that it is possible to produce an electrical connection between the lower part, the movable contact part and the opposite contact part, and whereby between the opposite contact part (7, 8) and the lower part (2) there is a permanent higher value electrical connection through the parallel connected resistor (16, 20).

12. Switching device according to any of claims 1 through 11, characterized in that the electrical conductivity of the resistor (16, 20) is adjustable.

13. Switching device according to any of claims 1 through 12, characterized in that the resistor is a metal resistor guided in the form of spiral curves.

14. Switching device according to claim 13, characterized in that the resistor (20) is punched out of a metal disk.

15. Switching device according to any of claims 1 through 14, characterized in that the resistor (16) is a carbon-made resistor.

16. Switching device according to any of claims 1 through 15, characterized in that the resistor (16, 20) is sealed in or recasted by an insulator cover.

17. Switching device according to claim 13, characterized in that removable bridges (32, 32a) are provided between individual portions (27, 29) of the resistor.

18. Switching device according to any of the preceding claims, characterized in that the resistor (16, 20) is arranged on an insulating material support (22, 23).

19. Switching device according to claim 18, characterized in that the support is made from ceramic.

20. Switching device according to claim 18 or claim 19, characterized in that the resistor is imprinted on the support.

21. Switching device according to any of the preceding claims, characterized in that the switching elements (12, 13) are sealed by a seal (19, 23, 51), such as a sealing disk.

22. Switching device according to any of the preceding claims, characterized by sealing via soldering.

23. Motor, particularly for roller blind drives or the like, comprising a self-holding temperature sensitive switching device according to any of the preceding claims.

24. Use of a temperature sensitive switching device comprising a first temperature sensitive switch in the form of a bimetallic switch and being constructed in a self-holding manner by an ohmic resistor connected in parallel thereto, and at least a second, automatically resettable temperature sensitive switch connected in series at least with said ohmic resistor and having an opening temperature above that of the first temperature sensitive switch, but well below temperatures causing irreversable damage to bimetallic elements, the two temperature sensitive switches being in close thermal contact with each other,
for protecting an electrotechnical device to be protected against an excess temperature due to a fault, such as a motor, e.g. a motor for roller blind drives or the like.

25. Use of an automatically resettable temperature sensitive switch having an opening temperature higher than that of an additional temperature sensitive switch in the form of a bimetallic switch and constructed in a self-holding manner by an ohmic resistor connected in parallel thereto, said opening temperature being well below temperatures that cause irreversable damage to bimetallic elements,
for protecting the self-holding temperature sensitive switch against excess temperature due to the ohmic resistor connected in parallel thereto.

## Revendications

1. Dispositif de commutation sensible à la température, destiné à un composant électrotechnique devant être protégé contre l'échauffement dû à une panne, comme un moteur, par exemple un moteur d'entraînement de volet roulant ou similaire, comportant un premier disjoncteur thermostatique se présentant sous la forme d'un disjoncteur bimétallique (64 ; 12, 13) et une résistance ohmique (16, 20) montée en parallèle de celui-ci, de telle sorte que, après ouverture du premier disjoncteur thermostatique (64), du fait d'un échauffement, le courant passe par la résistance ohmique (16, 20), celle-ci produise de la chaleur et qu'ainsi le premier disjoncteur thermostatique (64) soit maintenu ouvert, du fait du dégagement de chaleur de la résistance ohmique (16, 20), même en cas de diminution de l'échauffement ayant tout d'abord déclenché le processus de commutation et dû à un dysfonctionnement du composant électrotechnique destiné à être protégé, caractérisé en ce qu'un deuxième disjoncteur thermostatique (56, 57, 58) revenant à zéro tout seul, est monté en série avec au moins la résistance ohmique (16, 20) et possède une température d'ouverture supérieure à celle du premier disjoncteur thermostatique (64 ; 12, 13), mais sensiblement inférieure à des températures entraînant une détérioration irréversible d'éléments bimétalliques (12, 57), les deux disjoncteurs thermostatiques (56, 64) étant en étroite liaison thermique.

2. Dispositif de commutation selon la revendication 1, caractérisé en ce que le deuxième disjoncteur thermostatique (56) est monté en série avec le premier disjoncteur bimétallique (64) et également avec la résistance ohmique (16, 20).

3. Dispositif de commutation selon la revendication 1, caractérisé en ce que le montage en série du deuxième disjoncteur thermostatique (56) et de la résistance (16, 20) est parallèle au disjoncteur thermostatique.

4. Dispositif de commutation selon l'une des revendications précédentes, caractérisé en ce que les deux disjoncteurs thermostatiques (56, 64) sont disposés côte à côte sur un support (61) commun conducteur de chaleur.

5. Dispositif de commutation selon la revendication 4, caractérisé en ce que, lorsque le deuxième disjoncteur thermostatique est également conformé en disjoncteur bimétallique, une partie de contact de chaque disjoncteur (56, 64) forme son boîtier (1) et le support (61) est conducteur.

6. Dispositif de commutation selon la revendication 4 ou 5, caractérisé en ce que le support présente des pattes (62, 63) en regard l'une de l'autre, recourbées selon une forme de U sur le disjoncteur thermostatique (56, 64), ainsi que d'autres pattes (64a) maintenant celles-ci.

7. Dispositif de commutation selon l'une des revendications 1 à 3, caractérisé en ce que les deux disjoncteurs thermostatiques (56, 64) sont disposés de façon axialement superposée.

8. Dispositif de commutation selon la revendication 7, caractérisé en ce que l'un des disjoncteurs présente un organe d'espacement (76) et les disjoncteurs thermostatiques sont reliés par un rivet (73) servant d'organe de maintien mécanique et de liaison électrique.

9. Dispositif de commutation selon la revendication 7, caractérisé en ce que des chambres des disjoncteurs thermostatiques (56, 64), logeant des éléments de commutation (12, 13 ; 57, 58), sont reliées par une partie formant boîtier en matériau conduisant l'électricité.

10. Dispositif de commutation selon la revendication 7 à 9, caractérisé en ce qu'un boîtier (1) est constitué d'une pièce intermédiaire (76) cylindrique et de deux capuchons appliqués contre ses deux faces frontales, qui comprennent, entre eux et la pièce intermédiaire, les chambres destinées aux éléments de commutation (12, 13 ; 57, 58) des disjoncteurs thermostatiques (56, 64).

11. Dispositif de commutation selon l'une des revendications 1 à 10, caractérisé par un boîtier comportant une partie inférieure en forme de creuset et un couvercle, un élément de commutation comportant au moins une plaque bimétallique et une partie de contact mobile étant disposé dans la partie inférieure et, sous l'action de la plaque bimétallique, la partie de contact mobile pouvant être mise en liaison avec un contact opposé stationnaire, de telle sorte qu'une liaison électrique puisse être établie entre la partie inférieure, la partie de contact mobile et la partie de contact opposé, et une connexion électrique permanente de plus forte valeur ohmique entre la partie de contact opposé (7, 8) et la partie inférieure (2) existant par l'intermédiaire de la résistance (16, 20) montée en parallèle.

12. Dispositif de commutation selon l'une des revendications 1 à 11, caractérisé en ce que la conductibilité électrique de la résistance (16, 20) peut être ajustée.

13. Dispositif de commutation selon l'une des revendications 1 à 12, caractérisé en ce que la résistance est une résistance métallique en forme d'arc de spirale.

14. Dispositif de commutation selon la revendication 13, caractérisé en ce que la résistance (20) est découpée dans une plaque de métal.

15. Dispositif de commutation selon l'une des revendications 1 à 14, caractérisé en ce que la résistance (16) est une résistance en carbone.

16. Dispositif de commutation selon l'une des revendications 1 à 15, caractérisé en ce que la résistance (16, 20) est refondue ou revêtue d'un revêtement isolant.

17. Dispositif de commutation selon la revendication 13, caractérisé en ce qu'entre différentes parties (27, 29) de la résistance (20) sont présents des ponts (32, 32a), qu'il est possible de supprimer.

18. Dispositif de commutation selon l'une des revendications précédentes, caractérisé en ce que la résistance (16, 20) est disposée sur un support en matériau isolant (22, 23).

19. Dispositif de commutation selon la revendication 18, caractérisé en ce que le support est en céramique.

20. Dispositif de commutation selon la revendication 18 ou 19, caractérisé en ce que la résistance est imprimée en surcharge sur le support.

21. Dispositif de commutation selon l'une des revendications précédentes, caractérisé en ce que les éléments de commutation (12, 13) sont rendus étanches par un joint (19, 23, 51), tel qu'un joint plat.

22. Dispositif de commutation selon l'une des revendications précédentes, caractérisé par une étanchéité par brasage.

23. Moteur, en particulier destiné à l'entraînement de volet roulant ou similaire, équipé d'un dispositif de commutation sensible à la température, à auto-entretien, selon l'une des revendications précédentes.

24. Utilisation d'un dispositif de commutation sensible à la température comportant un premier disjoncteur thermostatique à auto-entretien, formé par une résistance ohmique montée en parallèle, se présentant sous la forme d'un disjoncteur bimétallique, et comportant un deuxième disjoncteur thermostatique revenant à zéro tout seul, monté en série avec au moins la résistance ohmique, qui possède une température d'ouverture supérieure à celle du premier disjoncteur thermostatique, mais sensiblement inférieure à des températures entraînant une détérioration irréversible d'éléments bimétalliques, les deux disjoncteurs thermostatiques étant en étroite liaison thermique,
pour protéger un composant électrotechnique devant être protégé contre l'échauffement dû à une panne, comme un moteur, par exemple un moteur d'entraînement de volet roulant ou similaire.

25. Utilisation d'un disjoncteur thermostatique revenant à zéro tout seul, comportant une température d'ouverture supérieure à celle d'un autre disjoncteur thermostatique, à auto-entretien, formé par une résistance ohmique montée en parallèle, se présentant sous la forme d'un disjoncteur bimétallique, mais sensiblement inférieure à des températures entraînant une détérioration irréversible d'éléments bimétalliques,
pour protéger le disjoncteur thermostatique à auto-entretien contre l'échauffement provoqué par la résistance ohmique montée en parallèle.
